# EUROPEAN PATENT APPLICATION

(11) **EP 4 447 192 A1**
(43) Date of publication of application: **16.10.2024**
(21) Application number: 24169722.6
(22) Date of filing: 11.04.2024
(51) Int. Cl.: H01M 10/46, H01M 10/0525, H01M 50/251, H02J 7/35, H02S 40/38

(54) **SCALABLE ENERGY STORAGE SYSTEM**

(30) Priority: 14.04.2023 BE 202305283
(71) Applicant: Clasener, Frans Louis, 5644 JC Eindhoven (NL); Van Der Sanden, Benny, 5644 JC Eindhoven (NL)
(72) Inventor: Clasener, Frans Louis, 5644 JC Eindhoven (NL); Van Der Sanden, Benny, 5644 JC Eindhoven (NL)
(74) Representative: Bureau M.F.J. Bockstael NV

(57) **Abstract**

An energy storage system comprising one or multiple storage units (1), whereby the storage units are installed between the underside of PV panels and the surface on which the PV panels are installed. Every storage unit is provided with a closed housing (2), in which one or multiple rechargeable battery cells (3), a charge controller (4), and a battery management system (5), which are interconnected electrically, are housed, an entry (6) for connecting to an energy source, a connection (7) with which the storage unit can be connected to one or more further storage units, an exit (8) for supplying the stored energy, and a network connection (9) for communicating between the battery management system and an external data processing unit and/or external control.

## Description

The present invention relates to multi-deployable scalable systems to temporarily store energy surpluses.

More specifically the invention relates to systems that can temporarily store green energy surpluses, such as for example generated by solar panels or wind turbines, and can supply the stored energy, on demand or not on demand, for local consumption or to the electrical grid.

It is a growing trend in the market to increasingly substitute energy generated by burning fossil fuels by green energy generated by sustainable sources such as for example solar power, wind, and biomass.
More specifically, solar panels and wind turbines are already used on a big scale to generate local green power for direct consumption by the end user. Because production and consumption, partly under the influence of the variable weather conditions, often do not match, there may be a surplus of green power that is not directly consumed by the end consumer. Sometimes but not always, said surplus may be supplied to the electrical grid. In some countries or regions supplying to the electrical grid is limited or prohibited. In addition, in certain circumstances such as for example in the event of an imminent overload, the grid operator may opt to intervene by remotely switching off green power installations. This leads to a waste of generated power. At other moments when the locally generated power does not cover the desired consumption of the end user, power needs to be withdrawn from the electrical grid. It is in the end user's financial interest to use as much locally generated power as possible and therefore not to supply to the electrical grid and to withdraw as little power as possible from the electrical grid. This is also in the interest of the grid operator for the stability of the electrical grid.

There are also countries or regions where newly established or expanding companies cannot connect to the electrical grid due to the increasing load on the already overloaded grid. By adding batteries to an installation the grid can be relieved such that space is created to provide additional connections. This is a stimulus for the business climate of a relevant country or region and allows companies to establish a branch or to expand.

It is known to temporarily store generated energy surpluses in local batteries, also known as home batteries. Typically, such home battery is an assembly of packs with battery cells set up somewhere in the house, the building or outside (usually against the facade). The stored energy is supplied back for local consumption if the demand exceeds the production or is supplied back to the electrical grid when this is possible again.

Known home batteries are relatively big and heavy. Due to their size, said home batteries constitute a relatively big investment, take up a relatively large amount of space and are difficult to install. Due to the weight the installation is difficult and expensive and requires special tools or more personnel to be able to carry out the installation within the existing legal frameworks relating to general occupational safety, more specifically ergonomics, wellbeing and safety. In addition, known home batteries are indivisible such that their use is suboptimal and in case of a failure will stop working altogether. Upon installation in a house, end consumers are furthermore confronted with additional disadvantages such as heat emission, noise caused by the cooling, as well as constituting a fire hazard. The fire hazard comprises a direct risk, more specifically fire starting in the battery, e.g. due to thermal overload, resulting in great damage to the relevant building or buildings, and an indirect risk when the fire starts elsewhere but extinguishing is a great deal more complex due to the presence of a battery.

To at least partially provide a solution to one or several of the aforementioned or other disadvantages the invention relates to an energy storage system comprising multiple PV panels installed on a surface and at least one storage unit, whereby the at least one storage unit is installed between the underside of the PV panels and the surface on which the PV panels are installed. The surface can be an elevated construction such as a roof or a sloping roof.

Every storage unit is provided with a closed housing, which houses one or multiple rechargeable battery cells, a charge controller, and a battery management system, which are interconnected electrically. Every storage unit is further provided with an entry for connecting to an energy source, a connection with which the storage unit can be connected in parallel and/or in series to one or more further storage units, an exit for supplying the stored energy, and a network connection for communicating between the battery management system and an external data processing unit and/or external control.

This configuration in which every storage unit forms a battery consisting of one or multiple rechargeable and dischargeable battery cells can work uni-directionally or bi-directionally and has the advantage that every storage unit can function as an independent unit or can be coupled to one or multiple further storage units. This ensures great flexibility.
Every storage unit can be separately controlled with its integrated battery management system. A user interface may be provided on the storage unit to enter settings of the battery management system and/or display the status and other data of the storage unit. In addition, the charge unit can be provided with a data processing unit for processing the status data and other data of the storage unit. Additionally or instead of said local user interface and/or said local data processing unit, a user interface and/or a data processing unit may be remotely provided which via a wired network connection, for example CAN-Bus or RS485, or a wireless network connection, for example via Wi-Fi or bluetooth, is connected to the battery management system of one or multiple selected charge units. The assembly can be controlled using a software application, the back-end of which is installed on a server connected to the data processing unit and a memory, whereby said server, if relevant, may or may not be partially located in the cloud, and the front-end is accessible via the external user interface installed on a computer, laptop or smartphone.

The connections of multiple storage units may also be coupled parallel to each other and if required managed remotely via the network with the aforementioned software application as a grid and as such form a modular expandable energy storage and control system. In an embodiment according to the invention the connection comprises a DC low-voltage connection and an RS485 or CAN-Bus signal connection.

The aforementioned storage units are also multi-deployable. Indeed, the configuration allows the charging capacity, weight and dimensions of an individual storage unit to be aligned with its desired charging capacity, and/or with the available space for installation, and/or with the portability. This scalability makes all kinds of applications of energy storage and installations of storage units possible. Apart from installation in the space delimited by the underside of a PV (photovoltaic) solar panel and the surface on which the PV solar panel is installed, other applications are also possible such as, for example, installation directly close to the energy source. Further applications are in lost spaces such as in modular walls or modular ceilings such that there is no or barely any impact on the available living area, or in a stacked or otherwise connected form which has the advantage, among others, that in case of failure of a storage unit the other storage units connected therewith can continue to function, or for mobile use whereby the storage unit is portable. Portable is understood to mean that the weight of the storage unit is sufficiently low to be carried by one single person within the legal requirements relating to general health and safety at work.

In an embodiment according to the invention the closed housing of the storage unit is configured such that the storage unit is splashproof. Typically the watertightness of the storage unit complies with IP55 or higher.

Also in an embodiment according to the invention, the battery cells of the storage unit are lithium iron phosphate battery cells, which increases the fire safety. Alternatively, other battery cells can be used with an overheating sensitivity that is equal to or lower than the overheating sensitivity of lithium iron phosphate battery cells.

The advantage of the described installation is that energy storage is possible immediately at the source. In addition, said installation of the storage units in an otherwise lost space has no impact on the available living area. Indeed, in the event of installation in the living area there is a loss of space and due to the heat generation in the battery the space will heat up. Installation in an otherwise lost space is also aesthetically sound because the installation between the PV panels and the underlying roof means the storage unit is not visible or in any case is not intrusively visible. Using the scalability of the storage unit it is possible to opt for one storage unit per PV panel. In addition, the storage capacity of each PV panel can be adapted to the maximum or expected generation capacity of the corresponding PV panel. In addition, if multiple storage units are provided in the energy storage system, it is possible to opt to interconnect said storage units in parallel, in series, or a combination of parallel and in series via their respective connections and to control the coupled storage units as a grid.

In an embodiment according to the invention the PV panels of the energy storage system are fastened to parallel profiles resting on the surface, such as an elevated construction, a roof or a sloping roof. The storage units are mounted on the profiles.

Also in an embodiment according to the invention the PV panels of the energy storage system are double-sided PV panels, also referred to as bifacial PV panels, and at least the side of the housing of the storage unit facing the panel is reflecting. The housing is made of polished steel or polished stainless steel, for example.

With the intention of better showing the characteristics of the invention, preferred embodiments of an energy storage system according to the invention are described hereinafter by way of an example, without any limiting nature, with reference to the accompanying drawings, wherein:
figure 1 schematically shows an embodiment of a storage unit of an energy storage system;
figure 2 shows a top view of an embodiment of an energy storage system according to the invention whereby the overlying PV panels are visually cut off;
figure 3 schematically shows a side view of the energy storage system shown in figure 2;
figure 4 schematically shows an embodiment of an energy storage system according to the invention, whereby the storage units are mounted in a modular wall.

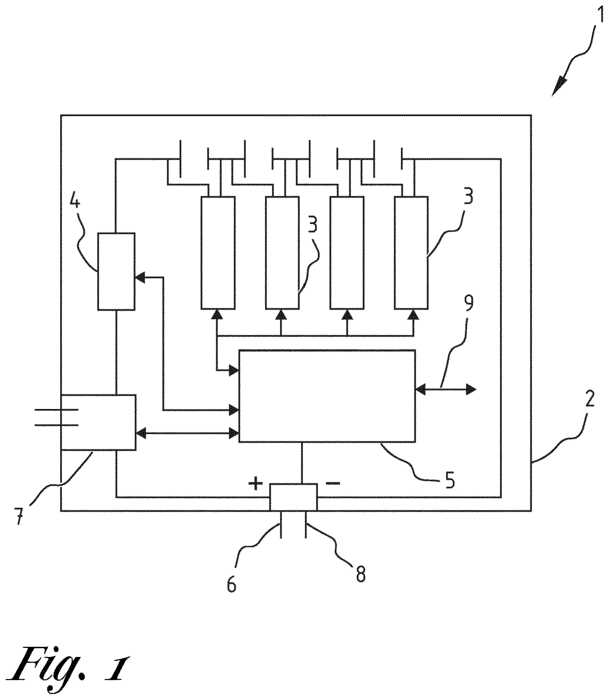

Figure 1 shows an embodiment of a storage unit 1 of an energy storage system according to the invention. The storage unit 1 has a closed box-shaped shock-resistant housing 2 made from plastic or metal, for example steel. The housing is splashproof which facilitates outside use and can be custom-made. The dimensions of the housing 2 are aligned to, among others, the desired charging capacity, the weight and the space in which the storage unit 1 needs to be incorporated Typically, the length of the housing 2 is from 20 cm through 170 cm, typically the width is from 20 cm through 130 cm, and typically the height is from 2.5 cm through 10 cm.

A rechargeable battery, a charge controller 4 and a battery management system 5 are incorporated in the housing 2 which are electrically interconnected. Typically, the battery consists of multiple battery cells 3. Preferably, the battery cells 3 are lithium iron phosphate battery cells due to their low overheating sensitivity or other high-quality battery cells that at least have the same low overheating sensitivity. Typically, the combined storage capacity of the battery cells 3 of a storage unit 1 has a value in the range from 0.7 kWh through 5.4 kWh.
The battery management system 5 monitors the status of the battery cells and manages the charging and discharging of the battery. Examples of said management are stopping the charge when the maximum battery voltage is reached, and balancing the respective voltages of the separate battery cells 3.

The storage unit 1 is also provided with a DC entry 6 which is connected to an energy source when in use. The charge controller 4 is located between the battery cells 3 and the entry 6 such that the battery cells are charged in a dosed and efficient way according to a specific charge method which is chosen depending on the energy source. Typically, if the energy source consists of PV (photovoltaic) solar panels a charge controller 4 and associated charge method are used which tries to generate as much power as possible on the maximum power point of the solar panel connected thereto and aligns the voltages of the battery and the solar panel to each other.

The storage unit 1 is further provided with a connection 7 with which the storage unit can be connected to one or more further storage units, an exit 8, and a network connection 9. Via the connection 7, multiple storage units 1 can be coupled in parallel and/or in series to each other. The connection can only be a DC connection or additionally a signal connection, such as for example a CAN-Bus or RS485 connection, may also be provided. The coupled storage units 1 can be managed as one grid. This provides more possibilities for effective charging and discharging and makes the system less sensitive for defects, for example in case of the failure of one storage unit 1.

Via the exit 8, the stored energy can be supplied via a micro- inverter, i.e. for example one inverter per storage unit 1 or in the event that the energy source are PV panels, possibly one inverter per PV panel, or alternatively via a central inverter, i.e. for example one inverter for all storage units coupled to each or in the event that the energy source are PV panels, possibly one inverter per installation, for local consumption or for supply to the electrical grid.

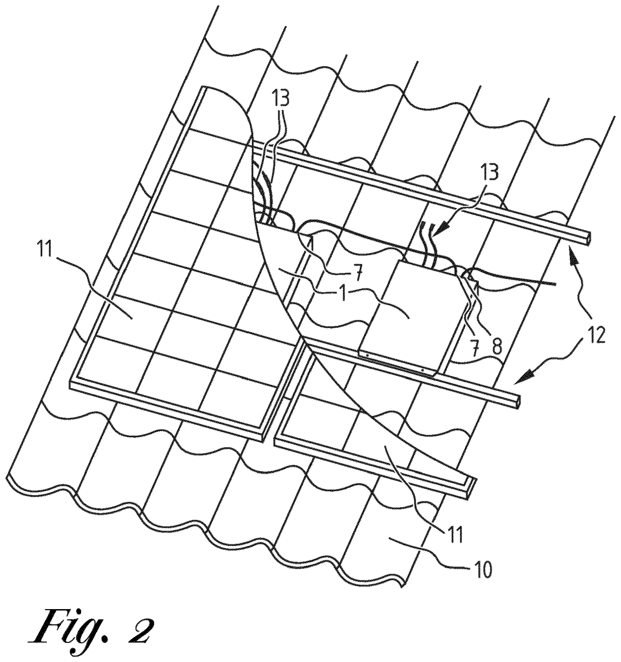

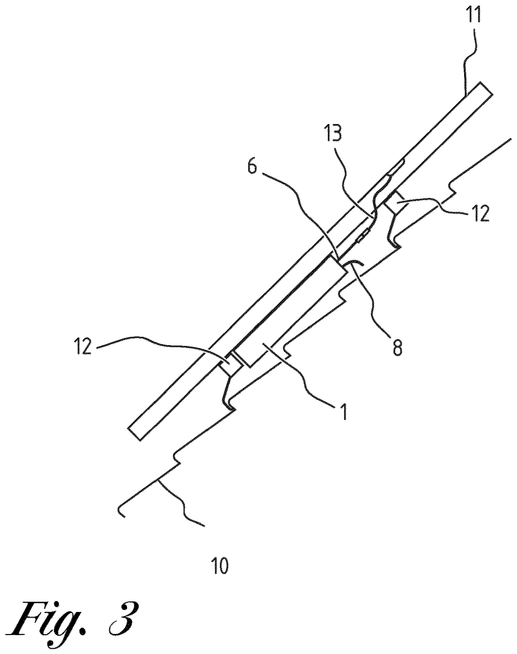

Figures 2 and 3 respectively show a partially cut out top view and a side view of an embodiment of an energy storage system that is mounted on a sloping roof 10. The PV panels 11 are mounted on a grating on metal roof profiles 12 that are fastened parallel to the ridge on the roof 10. A storage unit 1 is fastened to the roof profiles 12 under each PV panel 11. The dimensions of the storage unit are adapted such that the storage unit can be installed between two roof profiles in the space delimited by the underside of the relevant PV panel and the roof surface. The maximum charging capacity of the storage unit is adapted to the maximum power that the corresponding PV panel can generate. As the PV panel covers the storage unit after mounting, said storage unit is practically invisible. Every PV panel 11 is connected with electric cables 13 to the entry 6 of the storage unit 1 which is mounted under the relevant PV panel. The steel housing 2 is splashproof and at least meets the IP55 standard.

In the example shown, the storage units are interconnected in parallel via their connection 7 provided to that end. Because said storage units are coupled to each other they can be managed as a grid. This means, for example if one of the storage units 1 is dysfunctional, that the power generated by the PV panel 11 installed above can still be stored in the other storage units, at least as long as the whole functional grid of storage units has not yet reached its total maximum storage capacity. This also means that if, for example, a PV panel is temporarily in the shade, part of the power generated by the other PV panels can be stored in the storage unit of the shaded PV panel and as such the full grid can be effectively used in a balanced way until it reaches its maximum charging capacity. Discharging the storage units is possible via the exit 8 provided to that end through which, via an inverter, power can be supplied for local consumption or to the electrical grid. The storage units are connected via a CAN-Bus and/or RS485 to the network which allows the storage units to be remotely controlled and operated and to monitor and process relevant data.

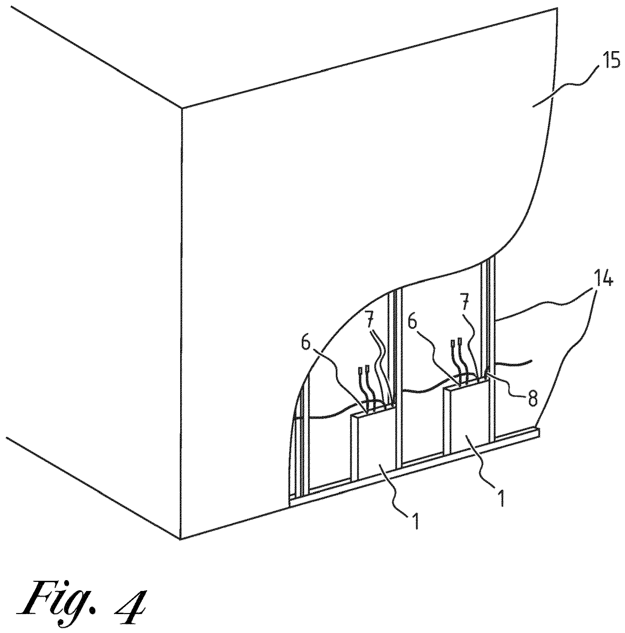

Figure 4 shows an example of an energy storage system that is installed indoors without impact on the available living area. The system contains multiple charge units 1 which are dimensioned such that they can be integrated between the wall profiles 14 of a modular wall. After finishing the modular wall with wall panels or plasterboard 15 the storage units 1 are concealed. For reasons of fire safety, the battery cells 3 of the storage units are lithium iron phosphate battery cells. The storage units 1 are connected in parallel and/or in series with each other via their connection provided to that end, i.e. a DC connection and/or a signal, 7 and/or via a data connection to the network, and can be controlled as a grid. The number of storage units can be adapted to the desired maximum storage capacity.

The present invention is by no means limited to the embodiments described as an example and shown in the figures, but an energy storage system according to the invention can be realised in all kinds of forms and dimensions without departing from the scope of the invention, as is described in the following claims.

## Claims

1. An energy storage system comprising multiple PV panels (11) installed on a surface, and at least one storage unit (1), whereby every storage unit is provided with a closed housing (2), in which one or multiple rechargeable battery cells (3), a charge controller (4), and a battery management system (5), which are interconnected electrically, are housed, an entry (6) for connecting to an energy source, a connection (7) for interconnecting the at least one storage unit, an exit (8) for supplying the stored energy, and a network connection (9) for communicating between the battery management system and an external data processing unit and/or external control, whereby the at least one storage unit is installed between the underside of the PV panels and the surface on which the PV panels are installed.

2. The energy storage system according to claim 1, **characterised in that** the connection (7) comprises a DC low voltage connection and a RS485 or CAN-Bus signal connection.

3. The energy storage system according to one of the previous claims, **characterised in that** the storage unit (1) is portable.

4. The energy storage system according to one of the previous claims, **characterised in that** at least two storage units (1) are provided which are interconnected in parallel via their connection (7) and form a grid.

5. The energy storage system according to one of the previous claims, **characterised in that** the PV panels (11) are fastened to parallel profiles (12) resting on the surface, whereby the storage units (1) are mounted on the profiles.

6. The energy storage system according to one of the previous claims, **characterised in that** the surface is a sloping roof (10).

7. The energy storage system according to one of the previous claims, **characterised in that** for every PV panel (11) one corresponding storage unit (1) is provided that is mounted between the underside of the relevant PV panel and the surface.
